# NEUE EUROPÄISCHE PATENTSCHRIFT

(11) **EP 1 495 885 B2**
(45) Veröffentlichungstag und Bekanntmachung des Hinweises auf die Entscheidung über den Einspruch: **14.10.2015**
(45) Hinweis auf die Patenterteilung: 29.08.2007
(21) Anmeldenummer: 04014175.6
(22) Anmeldetag: 17.06.2004
(51) Int. Cl.: B60H 1/00

(54) **Luftführungselement für ein Kraftfahrzeug**
Air conduit for automotive vehicle
Conduite d'air pour véhicule automobile

(30) Priorität: 09.07.2003 DE 10331085
(43) Veröffentlichungstag der Anmeldung: 12.01.2005
(73) Patentinhaber: REHAU AG + Co, 95111 Rehau (DE)
(72) Erfinder: Welzer, Jürgen, 95111 Rehau (DE); Laber, Matthias, 95111 Rehau (DE); Honheiser, Norbert, 95152 Selbitz (DE)
(74) Vertreter: Hofmann, Matthias

(56) Entgegenhaltungen:
- DE-C1- 4 101 709
- GB-A- 1 502 355
- US-A1- 2002 084 138
- DUBBEL, 15. AUFLAGE 1986, S. 677/678
- Fraunhofer Institut, Bericht ISTWIPP, April 2003

## Beschreibung

Die Erfindung betrifft ein akustisch optimiertes Luftführungselement für ein Kraftfahrzeug.

Ein Luftführungselement ist aus der DE 37 25 147 A1 bekannt. Dort ist als Zusatzkörper eine Schaumstoffschicht eingesetzt, welche eine Innenwand des Grundkörpers auskleidet. Die Herstellung eines derartigen zweischichtigen Luftführungselements ist aufwendig. Ein derartiges Luftführungselement ist auch aus der US 3 374 856 A bekannt.

Aus der DE 38 30 346 C2 ist ein Luftführungselement mit einem um einen rohrförmigen Grundkörper herum angebrachten schallabsorbierenden Zusatzkörper beschrieben. Luft, die im Grundkörper entlang des Luftkanals strömt, strömt an der äußeren Schalldämmung nicht vorbei. Damit die Luft mit der äußeren Schalldämmung wechselwirken kann, muss sie aus einer Mantelwand des Grundkörpers austreten. Dies führt zur Gefahr eines unerwünscht hohen Leckluftstroms. Ein weiteres Luftführungselement mit einem außenliegenden Schallabsorptionskörper ist aus der DE 78 27 573 U1 bekannt.

Die DE 197 30 922 A1 offenbart ein Luftführungselement, welches mit einer losen Schüttung röhrenförmiger Schallabsorptionskörper gefüllt ist. Eine derartige Schüttung bringt das Problem einer eigenen Schallerzeugung und aufgrund der Bauausführung einen erheblichen Strömungswiderstand mit sich.

Aus der GB-A-1 502 355 ist es dazu bekannt, dass es zur effizienten Schallabsorption nicht notwendig ist, das Luftführungselement längs des gesamten Luftkanals mit schallabsorbierendem Material auszukleiden. Es reicht vielmehr aus, gezielt mindestens einen am Grundkörper gehalterten Zusatzkörper einzusetzen und dessen schallabsorbierende Wirkung zu nutzen. Diese schallabsorbierende Wirkung kann dabei so effizient sein, dass erzeugter Schall aus vorgeschalteten Einheiten wie Klimagerät oder des eigentlichen Luftführungssystems trotzdem vom Zusatzkörper absorbiert wird. Insgesamt lässt sich mit im Vergleich zum Grundkörper baukleinen Ausgestaltungen von Zusatzkörpern, die einfach mit dem Grundkörper verbunden werden können, eine ausreichende schalldämmende Wirkung erzielen. Flächenelemente, welche dem Luftkanal folgend ausgerichtet sind, müssen hierbei nicht notwendigerweise parallel zum Luftkanal ausgerichtet sein. Der oder die Zusatzkörper können daher auch zum Beispiel leicht schräg zum Verlauf des Luftkanals angeordnet sein.

Es ist daher die Aufgabe der vorliegenden Erfindung, ein Luftführungselement der eingangs genannten Art derart weiterzubilden, dass es kostengünstiger hergestellt werden kann, wobei gleichzeitig eine hohe Montagefreundlichkeit des Luftführungselements erzielt werden soll und keine wesentlichen Leckluftströme auftreten sollen.

Diese Aufgabe ist erfindungsgemäß gelöst durch ein Luftführungselement mit den Merkmalen des Anspruchs 1. Ein derartiger Zusatzkörper lässt sich besonders einfach montieren.

Ein derartiges PET-Vlies hat sich als besonders günstiges Material zum Aufbau des erfindungsgemäßen Zusatzkörpers herausgestellt. Bei der Herstellung eines derartigen Zusatzkörpers lassen sich Herstellparameter, insbesondere die Temperatur und der Druck sowie die Zeitdauer beim thermischen Verpressen, so einstellen, dass die Durchgängigkeit des Zusatzkörpers sowie die Rauhigkeit des Wände des Zusatzkörpers, an denen die Luft entlang strömt, in weiten Bereichen variiert werden können und somit die schallabsorbierende Wirkung des Zusatzkörpers im Luftführungselement optimiert werden kann.

Ebene Flächenelemente haben sich besonders effizient hinsichtlich ihrer schallabsorbierenden Wirkung herausgestellt. Die Anordnung eines derartigen Flächenelements kann dabei parallel oder senkrecht zu einer Luftführungsebene erfolgen, die von einem gegebenenfalls gekrümmten Grundkörper vorgegeben wird. Das oder die Flächenelemente können auch leicht schräg zur Strömungsrichtung angeordnet sein.

Eine Ausgestaltung nach Anspruch 2 erlaubt eine Halterung des Zusatzkörpers im Grundkörper, ohne dass zusätzliche Fixierungselemente erforderlich sind. Der Grundkörper kann hier vier- oder mehreckig, zum Beispiel sechs- oder achteckig ausgestaltet sein.

Fixierungselemente nach Anspruch 3, die alternativ oder zusätzlich vorgesehen sein können, erlauben einen großen Gestaltungsspielraum, was die Anordnung und Orientierung des Zusatzkörpers oder der Zusatzkörper angeht.
Fixierungselemente nach den Ansprüchen 4 und 5 lassen sich insbesondere einstückig bei der Herstellung des Grundkörpers anformen.

Eine Ausgestaltung nach Anspruch 6 hat sich hinsichtlich ihrer schallabsorbierenden Wirkung als besonders effizient herausgestellt.

Längen des Zusatzkörpers gemäß Anspruch 7 sowie Aspektverhältnisse nach Anspruch 8 haben sich als vorteilhafte Dimensionierungen zur Herbeiführung einer guten Geräuschdämmung herausgestellt.

Ausführungsbeispiele werden nachfolgend anhand der Zeichnung näher erläutert. In dieser zeigen:
- Fig. 1: schematisch ein erfindungsgmäße Luftführungselement für ein Kraftfahrzeug mit einem einen Luftkanal vorgebenden Grundkörper und einem schallabsorbierenden Zusatzkörper in einer perspektivischen Darstellung;
- Fig. 2: schematisch eine weitere erfindungsgmäße Ausführungsform eines Luftführungselements mit einem Grundkörper und zwei schallabsorbierenden Zusatzkörpern in einer perspektivischen Darstellung;
- Fig. 3: schematisch eine weitere erfindungsgmäße Ausführungsform eines Luftführungselements mit einem Grundkörper und einem Zusatzkörper in einer perspektivischen Darstellung;
- Fig. 4: schematisch eine nicht erfindungsgemäße Ausführungsform eines Luftführungselements mit einem Grundkörper, einem selbsttragenden und einem nicht selbsttragenden Zusatzkörper im Querschnitt;
- Fig. 5: schematisch eine nicht erfindungsgemäße Ausführungsform eines Luftführungselements mit einem Grundkörper und zwei Zusatzkörpern; und
- Fig. 6: schematisch eine nicht erfindungsgemäße Ausführungsform eines Luftführungselements mit einem Grundkörper und einem Zusatzkörper.

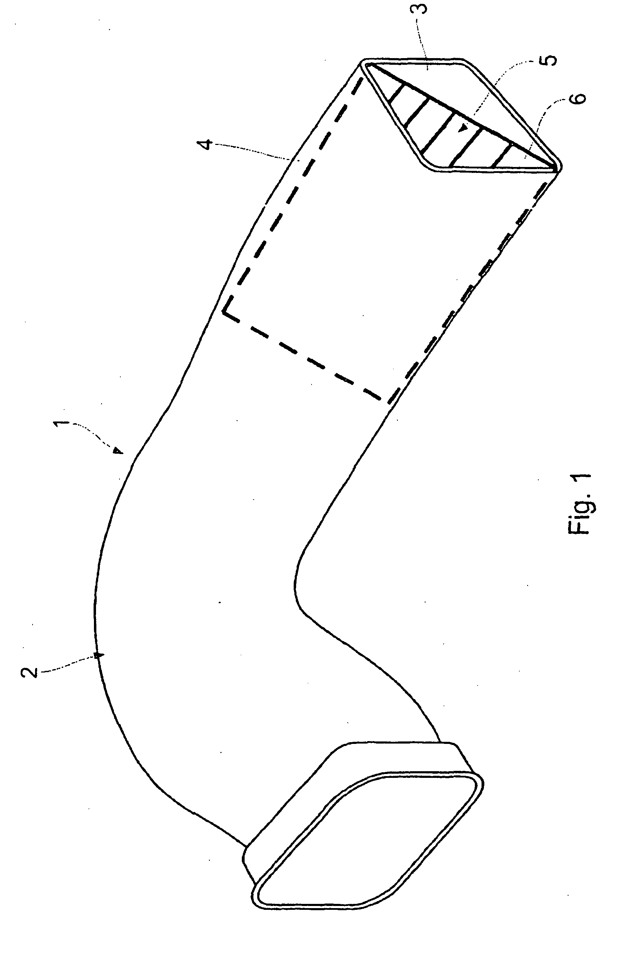

In Fig. 1 ist schematisch eine erste Ausführungsform eines Luftführungselements 1 für ein nicht dargestelltes Kraftfahrzeug in perspektivischer Ansicht gezeigt. Das Luftführungselement 1 dient zur Luftverteilung im Fahrzeuginnenraum, insbesondere als Verbindung zwischen Klimaanlage und Ausströmer.

Das Luftführungselement 1 hat einen im gezeigten Ausführungsbeispiel in etwa L-förmig gebogenen rohrförmigen Grundkörper 2 mit einer Innenwand 3, die einen Luftkanal vorgibt.

Der Grundkörper 2 ist ein Kunststoffbauteil, welches beispielsweise durch ein Extrusionsblasformverfahren herstellbar ist. Der Grundkörper 2 hat einen rechteckigen Querschnitt. In einen im Wesentlichen gerade verlaufenden Abschnitt 4 des Grundkörpers 2 ist ein schallabsorbierender Zusatzkörper 5 zwischen zwei einander diagonal gegenüberliegenden Eckbereichen des rechteckigen Grundkörpers 2 eingesteckt.

Der Zusatzkörper 5 ist als ebenes, selbsttragendes Flächenelement ausgebildet und in der gezeigten Ausführung eine durchgehende Matte aus einem verfestigten, thermisch verpressten PET-Vliesstoff. Ein derartiger PET-Vliesstoff ist unter der Handelsbezeichnung "sawaform" durch offenkundige Vorbenutzung bekannt. Das Flächengewicht des Zusatzkörpers 5 beträgt etwa 800 bis 1000 g/m². Auch andere Flächengewichte sind möglich. Die Länge des Zusatzkörpers 5 längs dem durch den Grundkörper 2 vorgegebenen Luftkanal entspricht in etwa der halben Länge des langen Schenkels des L-förmigen Grundkörpers 2. Auch andere Längenverhältnisse des diagonal eingesetzten Zusatzkörpers 5 zum Grundkörper 2 sind möglich. Eine typische Länge des Zusatzkörpers 5 liegt im Bereich von 200 mm. Die Breite des Zusatzkörpers 5 ist nur geringförmig kleiner als die diagonale Innenabmessung des Grundkörpers 2, sodass der Zusatzkörper 5 ohne weitere Hilfsmittel im Grundkörper 2 gehaltert ist.

Die Stärke des Zusatzkörpers 5 beträgt im vorliegenden Fall 10 mm, wobei auch andere Stärken, insbesondere im Bereich zwischen 3 und 10 mm möglich sind. Die Wahl der Stärke des Zusatzkörpers 5 erfolgt unter Berücksichtigung des Volumendurchsatzes der Luftströmung und des Absorptionsgrades. Dies erfolgt unter Berücksichtigung des Ergebnisses einer Analyse der frequenzabhängigen Geräuschdämpfung. Verfahren zur Geräuschmessung, die der Fachmann dabei einsetzt, sind beispielsweise in den Richtlinien VDI 2081 beschrieben.

Eine schallabsorbierende Wirkung des Zuatzkörpers 5 im Grundkörper 2 kommt beim Luftführungselement 1 folgendermaßen zustande:

Beim Betrieb des Lüftungssystems des Kraftfahrzeugs strömt Luft, die Schall aus der Erzeugerquelle, zum Beispiel einem Ventilator der Klimaanlage, mit sich führt, an den gegenüberliegenden Wänden 6 des Zusatzkörpers 5 entlang des Luftkanals. Auf Höhe des Zusatzkörpers 5 strömt die Luft zudem an der Innenwand 3 des Grundkörpers entlang. Über die Rauheit der Wände 6 des Zusatzkörpers 5 und über das Absorptionsverhalten des Zusatzkörpers 5 lässt sich Luftschall, der sich aufgrund der Luftströmung im Grundkörper 2 ausbreitet, im Zusatzkörper 5 wirkungsvoll dämpfen. Der Luftschall kann als reines Strömungsgeräusch, aber auch als extern entstehender Schall vorliegen, der als Körperschall über die Wände des Luftführungselements 1 auf die Luftströmung übertragen wird. Zudem wirkt der Zusatzkörper 5 innerhalb des Grundkörpers 2 aufgrund seiner mechanischen Ankopplung an dieses als mechanisches Dämpfungselement, sodass auch eine Dämpfung von Körperschall, der sich längs des Grundkörpers 2 ausbreitet, möglich ist. Es ergibt sich für typische auftretende Schallfrequenzen eine Reduktion der vom Grundkörper 2 ausgehenden Schallemission im Vergleich zum Grundkörper 2 ohne Zusatzkörper 5 von typischerweise 5 dB(A). Auch höhere Reduktionswerte sind möglich.

Zusätzlich zum Zusatzkörper 5 kann das Luftführungselement 1 noch mit weiteren, nicht selbsttragenden zusätzlich schalldämmenden Schichten versehen sein, die vom Grundkörper 2 getragen sind. Beispiele für derartige zusätzliche Schichten sind dem Fachmann aus dem Stand der Technik, zum Beispiel aus der DE 37 25 147 A1 oder aus der DE 38 30 346 C2 und den dort diskutierten Druckschriften bekannt.

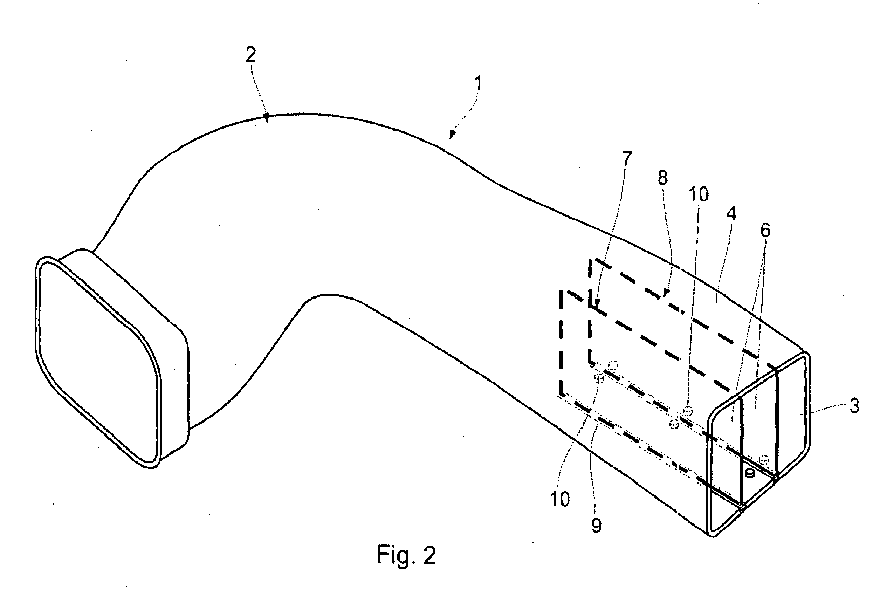

Eine weitere Ausführungsform eines Luftführungselements für ein Kraftfahrzeug ist in Fig. 2 dargestellt. Komponenten, die denjenigen entsprechen, die vorstehend schon erläutert wurden, tragen die gleichen Bezugszeichen und werden nicht nochmals im Einzelnen beschrieben.

Anstelle des einen Zusatzkörpers 5 weist das Luftführungselement 1 nach Fig. 2 zwei Zusatzkörper 7, 8 auf, die aus dem gleichen Material bestehen wie der Zusatzkörper 5. Auch die Wandstärke der Zusatzkörper 7, 8 entspricht derjenigen des Zusatzkörpers 5. Die Zusatzkörper 7, 8 der Ausführung nach Fig. 2 sind ebenfalls ebene Flächenelemente, deren Wände parallel zum vom Grundkörper 2 vorgegebenen Luftkanal ausgerichtet sind.

Im Unterschied zum Zusatzkörper 5 sind die Zusatzkörper 7, 8 in der Darstellung nach Fig. 2 vertikal orientiert im Grundkörper 2 derart angeordnet, dass sie senkrecht zu einer Luftführungsebene orientiert liegen, die der Grundkörper 2 aufgrund seiner Krümmung vorgibt.

Die Zusatzkörper 7, 8 sind mit Hilfe von Fixierungselementen im Grundkörper 2 gehaltert. In Fig. 2 sind beispielhaft zwei Varianten derartiger Fixierungselemente dargestellt. Der in Fig. 2 linke Zusatzkörper 7 ist in zwei gegenüberliegende, längs des Luftführungskanals verlaufende Nuten in der Innenwand 3 des Grundkörpers 2 eingeschoben, von denen in Fig. 2 die bodenseitige Nut 9 dargestellt ist. Mit Hilfe dieser beiden Nuten ist der Zusatzkörper 7 gegen eine Verlagerung relativ zum Grundkörper 2 gesichert. Der Zusatzkörper 8 ist zwischen Paaren von einstückig an die Innenwand 3 angeformten Noppen 10 eingeschoben, von denen in Fig. 2 drei bodenseitige Paare von Noppen 10 dargestellt sind. Die Noppen 10 haben die gleiche Funktion wie die Nuten 9, begrenzen also Fixierungsbahnen für die Zusatzkörper 7, 8.

Die Länge der Zusatzkörper 7, 8 kann etwa die Hälfte der Länge des längeren Schenkels des L-förmigen Grundkörpers 2 betragen. Typische Längen der Zusatzkörper 7, 8 liegen im Bereich zwischen einem Viertel und der Hälfte der Länge des Grundkörpers 2. Die beiden Zusatzkörper 7, 8 liegen parallel zueinander und haben einen Abstand zueinander, der größer ist als ein Viertel der typischen Querschnittsabmessung des durch die Innenwand 3 vorgegebenen Luftkanals. Erfindungsgemäße Zusatzkörper können ein Verhältnis von Länge zu Breite im Bereich zwischen 3:1 und 1:1 aufweisen.

Die schallabsorbierenden Funktion der Zusatzkörper 7, 8 im Luftführungselement 1 nach Fig. 2 entspricht derjenigen, die oben schon im Zusammenhang mit dem Luftführungselement 1 nach Fig. 1 erläutert wurde. Zur Optimierung der schallabsorbierenden Wirkung der Zusatzkörper 7, 8 werden neben den Materialparametern Oberflächenrauhigkeit und Durchlässigkeit des Zusatzkörpermaterials auch ihre Länge im Grundkörper 2 und ihr Abstand zueinander an die Dimensionierung und Geometrie des Grundkörpers 2 angepasst.

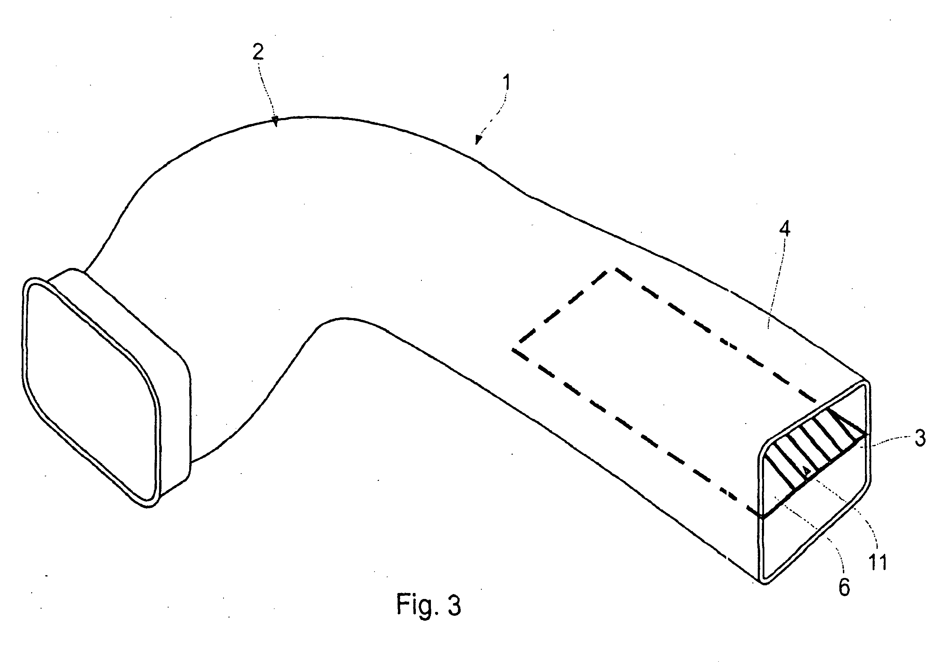

Eine weitere Ausführungsform eines akustisch optimierten Luftführungselements für ein Kraftfahrzeug ist in Fig. 3 dargestellt. Komponenten, die denjenigen entsprechen, die oben schon unter Bezugnahme auf die Fig. 1 und 2 diskutiert wurden, tragen die gleichen Bezugszeichen und werden nicht nochmals im Einzelnen erläutert. Auch die schallabsorbierende Funktion des Luftführungselements nach Fig. 3 entspricht derjenigen, die im Zusammenhang mit dem Luftführungselement nach Fig. 1 schon beschrieben wurde.

Ein Zusatzkörper 11 ist bei der Ausführung nach Fig. 3 ebenfalls als ebenes Flächenelement mit parallel zum vom Grundkörper 2 vorgegebenen Luftkanal ausgerichteten Wänden 6 gebildet. Das Material für den Zusatzkörper 11 und auch dessen Wandstärke entsprechend dem, was im Zusammenhang mit den Fig. 1 und 2 ausgeführt wurde. Der Zusatzkörper 11 ist in der Darstellung nach Fig. 3 horizontal orientiert im Grundkörper 2 angeordnet, verläuft also parallel zur durch die Krümmung des Grundkörpers 2 vorgegebenen Luftführungsebene des Luftführungselements 1. Stirnseitige Randbereiche des Zusatzkörpers 11 sind mit Fixierungselementen an der Innenwand 3 des Grundkörpers 2 gehaltert, wie im Zusammenhang mit der Ausführung nach Fig. 2 beschrieben. Die Fixierungselemente sind in Fig. 3 nicht nochmals dargestellt.

Die Länge des Zusatzkörpers 11 längs des vom Grundkörper 2 vorgegebenen Luftkanals beträgt in etwa die Hälfte der Länge des längeren Schenkels des L-förmigen Grundkörpers. Auch andere Längen sind möglich. Der Zusatzkörper 11 kann sich zum Beispiel längs praktisch der gesamten Länge des längeren Schenkels des L-förmigen Grundkörpers 2 erstrecken.

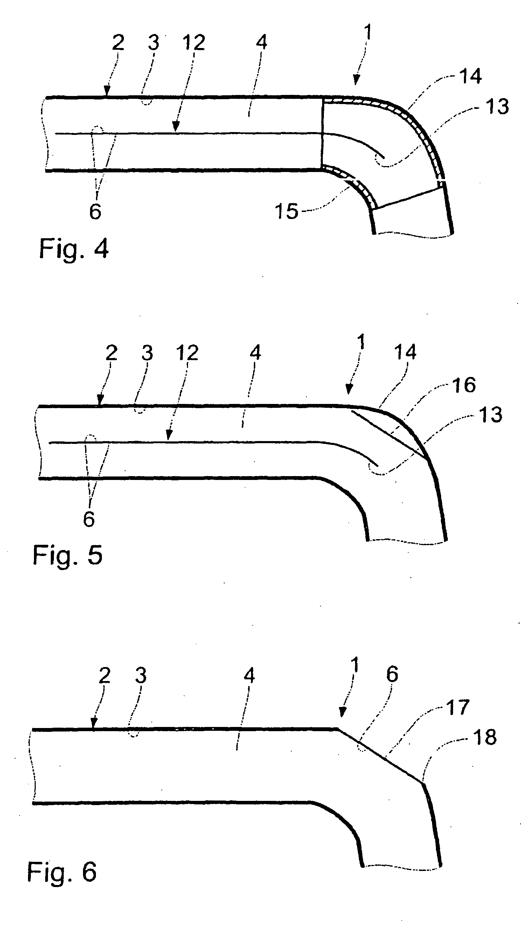

Eine nicht erfindungsgemäße Ausführungsform eines Luftführungselements für ein Kraftfahrzeug ist in Fig. 4 schematisch im Querschnitt dargestellt. Komponenten, die denjenigen entsprechen, die vorstehend schon unter Bezugnahme auf die Fig. 1 bis 3 diskutiert wurden, tragen die gleichen Bezugszeichen und werden nicht nochmals im Einzelnen erläutert.
Das Luftführungselement 1 nach Fig. 4 entspricht im Wesentlichen der Ausführung nach Fig. 2 mit dem Unterschied, dass anstelle zweier Zusatzkörper bei der Ausführung nach Fig. 4 nur ein Zusatzkörper 12 vertikal orientiert im Grundkörper 2 angeordnet ist.

Ein weiterer Unterschied ist der, dass der Zusatzkörper 12 nicht nur längs des gesamten längeren Schenkels des L-förmigen Grundkörpers, sondern mit einem gekrümmten Endbereich 13 auch in einem gekrümmten Abschnitt 14 des Grundkörpers 2 angeordnet ist. Auch der Endbereich 13 des Zusatzkörpers 12 ist parallel zum vom Grundkörper 2 vorgegebenen Luftkanal ausgerichtet. Die Krümmung des Endbereichs 13 ist also auf die Krümmung des gekrümmten Abschnitts 14 abgestimmt.

Das Material des Zusatzkörpers 12 entspricht dem der Ausführungen nach den Fig. 1 bis 3.

Der Grundkörper 2 weist bei der Ausführung nach Fig. 4 im gekrümmten Abschnitt 14 eine zusätzliche schallabsorbierende dünne Auskleidung 15 auf, die nicht selbsttragend ist und ebenfalls aus einem Vliesstoff besteht. Zusätzlich zur schallabsorbierenden Wirkung des Zusatzkörpers 12, die derjenigen des Zusatzkörpers 5 der Ausführung nach Fig. 1 entspricht, hat die Auskleidung 15 eine schallabsorbierende Wirkung.

Eine nicht erfindungsgemäße Ausführungsform eines Luftführungselements für ein Kraftfahrzeug ist in Fig. 5 dargestellt. Komponenten, die denjenigen entsprechen, die vorstehend im Zusammenhang mit den Fig. 1 bis 4 schon erläutert wurden, tragen die gleichen Bezugszeichen und werden nicht nochmals im Einzelnen diskutiert.

Das Luftführungselement 1 nach Fig. 5 entspricht demjenigen nach Fig. 4 mit dem Unterschied, dass anstelle einer Auskleidung 15 bei der Ausführung nach Fig. 5 ein zweiter Zusatzkörper 16 nahe der äußeren gekrümmten Wand des gekrümmten Abschnitts 14 des Grundkörpers 2 angeordnet ist. Die Funktion des Zusatzkörpers 16 entspricht derjenigen der Auskleidung 15. Das Material des Zusatzkörpers 16 entspricht dem der Auskleidung 15.

In Fig. 6 ist eine nicht erfindungsgemäße Variante eines Luftführungselements für ein Kraftfahrzeug dargestellt. Komponenten, die denjenigen entsprechen, die unter Bezugnahme auf die Ausführungsformen nach den Fig. 1 bis 5 schon diskutiert wurden, tragen die gleichen Bezugsziffern und werden nicht nochmals im Einzelnen erläutert.

Beim Luftführungselement 1 nach Fig. 6 ist als Zusatzkörper 17 ein selbsttragendes ebenes Flächenelement oder ein Formteil vorgesehen, welches eine Öffnung 18 in der äußeren Wand des gekrümmten Abschnitts 14 überdeckt, dort also einen fehlenden Wandabschnitt des Grundkörpers ersetzt. Das Material, aus dem der Zusatzkörper 17 gefertigt ist, entspricht dem Material des Zusatzkörpers 5 bei der Ausführung nach Fig. 1.

Die schallabsorbierende Funktion des Zusatzkörpers 17 im Luftführungselement nach Fig. 6 ist folgende: Durch die Materialwahl, die Rauhigkeit und die Durchlässigkeit, die beim Zusatzkörper 17 vorgegeben werden, wird sichergestellt, dass die Luftströmung durch den Grundkörper 2 im Bereich des gekrümmten Abschnitts 14 so geführt ist, dass die Emission von Luftschall reduziert ist. Beim Zusatzkörper 17 wird also ein bestimmter Leckluftstrom aufgrund der Durchgängigkeit des Zusatzkörpers 17 gezielt zur Verbesserung der schallabsorbierenden Wirkung eingesetzt. Gleichzeitig kann der Zusatzkörper 17 als Dämpfungselement für sich längs des Grundkörpers 2 ausbreitenden Körperschall dienen.

Die Zusatzkörper 16, 17 müssen nicht notwendigerweise eine selbsttragende Struktur aufweisen.

Wenn der Zusatzkörper einer der oben beschriebenen Ausführungsformen durch thermische Verpressung hergestellt wird, kann die Durchgängigkeit des Zusatzkörpers, die Einfluss auf dessen schallabsorbierende Wirkung hat, über den thermischen Verpressungsgrad eingestellt werden.

Grundsätzlich gilt, dass die schallabsorbierende Wirkung der Zusatzkörper nach den oben beschriebenen Ausführungsformen umso besser ist, je größer die Flächen der Wände 6 sind und je rauer die Oberflächenbeschaffenheit der Wände ist, an denen die im Luftführungselement geführte Luft entlang strömt.

## Patentansprüche

1. Luftführungselement (1) für ein Kraftfahrzeug
- mit einem rohrförmigen Grundkörper (2), dessen Innenwand (3) einen Luftkanal vorgibt,
- mit mindestens einem schallabsorbierenden Zusatzkörper (5, 7, 8, 11), der so am Grundkörper (2) gehaltert ist, dass Luft, welche im Grundkörper (2) entlang des Luftkanals strömt, an mindestens einer Wand (6) des Zusatzkörpers (5, 7, 8, 11) entlang strömt,
- wobei der Zusatzkörper (5, 7, 8, 11) als Flächenelement ausgebildet ist, dessen Wände (6) dem Luftkanal folgend ausgerichtet sind,
- wobei der Zusatzkörper (5, 7, 8, 11) so ausgestaltet ist, dass auf Höhe des Zusatzkörpers (5, 7, 8, 11) die Luft an mindestens einer Wand (6) des Zusatzkörpers (5, 7, 8, 11) und zudem an einer weiteren, den Luftkanal vorgebenden Wand (3) entlang strömt,
- wobei der Zusatzkörper (5, 7, 8, 11) als ebenes Flächenelement ausgestaltet ist, dessen Wände (6) parallel zum Luftkanal ausgerichtet sind, wobei die Anordnung der Wände (6) des im Grundkörper (2) angeordneten Zusatzkörpers (5, 7, 8, 11) derart ist, dass die Luft an den gegenüberliegenden Wänden des Zusatzkörpers (5, 7, 8, 11) entlang des Luftkanals strömt,
**dadurch gekennzeichnet, dass**
- der Zusatzkörper (5, 7, 8, 11) eine selbsttragende Struktur aus schallabsorbierendem Material hat,
- das schallabsorbierende Material ein verfestigter, thermisch verpresster PET-Vliesstoff ist.

2. Luftführungselement nach Anspruch 1, **dadurch gekennzeichnet, dass** der Grundkörper (2) einen mehreckigen, insbesondere rechteckigen Querschnitt aufweist, wobei der Zusatzkörper (5) zwischen einander insbesondere diagonal gegenüberliegenden Ecken des Grundkörpers (2) eingeführt und gehaltert ist.

3. Luftführungselement nach Anspruch 1 oder 2, **dadurch gekennzeichnet, dass** der Grundkörper (2) Fixierungselemente (9, 10) zur Halterung des Zusatzkörpers (5, 7, 8, 11) aufweist, welche insbesondere einstückig an der Innenwand (3) des Grundkörpers (2) angeformt sind.

4. Luftführungselement nach Anspruch 3, **dadurch gekennzeichnet, dass** die Fixierungselemente als Noppen (10) ausgebildet sind, welche Fixierungsbahnen für den Zusatzkörper (5, 7, 8, 11) begrenzen.

5. Luftführungselement nach Anspruch 3, **dadurch gekennzeichnet, dass** die Fixierungselemente als Nuten (9) ausgebildet sind, welche Fixierungsbahnen für den Zusatzkörper (5, 7, 8, 11) vorgeben.

6. Luftführungselement nach einem der Ansprüche 1 bis 5, **gekennzeichnet durch** zwei parallel zueinander im Grundkörper (2) angeordnete Zusatzkörper (7, 8), deren Abstand zueinander insbesondere größer ist als ein Viertel der typischen Querschnittsabmessung der Innenwand (3) des Grundkörpers (2).

7. Luftführungselement nach einem der Ansprüche 1 bis 6, **gekennzeichnet durch** einen Zusatzkörper (5, 7, 8, 11), der eine Länge im Bereich zwischen einem Viertel und der Hälfte der typischen Länge des Grundköpers (2) aufweist.

8. Luftführungselement nach einem der Ansprüche 1 bis 7, **gekennzeichnet durch** einen Zusatzkörper (5, 7, 8, 11) mit einem Verhältnis von Länge zu Breite im Bereich zwischen 3:1 und 1:1.

## Claims

1. Air guide element (1) for a motor vehicle
- having a tubular base body (2) whose inner wall (3) defines an air duct,
- having at least one sound-absorbing additional body (5, 7, 8, 11) which is retained on the base body (2) in such a way that air which flows in the base body (2) along the air duct flows along on at least one wall (6) of the additional body (5, 7, 8, 11),
- with the additional body (5, 7, 8, 11) being embodied as a planar element whose walls (6) are aligned so as to follow the air duct,
- with the additional body (5, 7, 8, 11) being designed such that, at the level of the additional body (5, 7, 8, 11), the air flows along on at least one wall (6) of the additional body (5, 7, 8, 11) and additionally on a further wall (3) which defines the air duct,
- with the additional body (5, 7, 8, 11) being designed as a flat planar element whose walls (6) are aligned parallel to the air duct, wherein the arrangement of the walls (6) of the additional body (5, 7, 8, 11) arranged in the main body (2) is such that the air flows along the air duct on the opposite walls of the additional body (5, 7, 8, 11),
**characterized in that**
- the additional body (5, 7, 8, 11) has a self-supporting structure made from sound-absorbing material,
- the sound-absorbing material is a reinforced, thermally compressed PET nonwoven.

2. Air guide element according to Claim 1, **characterized in that** the base body (2) has a polygonal, in particular rectangular cross section, with the additional body (5) being inserted and retained between corners, which are situated opposite one another in particular diagonally, of the base body (2).

3. Air guide element according to Claim 1 or 2, **characterized in that** the base body (2) has fixing elements (9, 10) for retaining the additional body (5, 7, 8, 11) which are in particular integrally formed in a unipartite fashion on the inner wall (3) of the base body (2).

4. Air guide element according to Claim 3, **characterized in that** the fixing elements are embodied as knobs which delimit fixing tracks for the additional body (5, 7, 8, 11).

5. Air guide element according to Claim 3, **characterized in that** the fixing elements are embodied as grooves (9) which define fixing tracks for the additional body (5, 7, 8, 11).

6. Air guide element according to one of Claims 1 to 5, **characterized by** two additional bodies (7, 8) which are arranged parallel to one another in the base body (2) and whose spacing to one another is in particular greater than one quarter of the typical cross sectional dimension of the inner wall (3) of the base body (2).

7. Air guide element according to one of Claims 1 to 6, **characterized by** an additional body (5, 7, 8, 11) which has a length in the range between one quarter and one half of the typical length of the base body (2).

8. Air guide element according to one of Claims 1 to 7, **characterized by** an additional body (5, 7, 8, 11) with a ratio of length to width in the range between 3:1 and 1:1.

## Revendications

1. Elément de guidage d'air (1) pour un véhicule automobile
- comprenant un corps de base (2) de forme tubulaire, dont la paroi interne (3) prédéfinit un conduit d'air,
- comprenant au moins un corps supplémentaire d'absorption des sons (5, 7, 8, 11) qui est fixé sur le corps de base (2) de telle sorte que de l'air qui s'écoule dans le corps de base (2) le long du conduit d'air s'écoule au moins le long d'une paroi (6) du corps supplémentaire (5, 7, 8, 11),
- le corps supplémentaire (5, 7, 8, 11) étant réalisé sous forme d'élément de surface dont les parois (6) sont orientées en suivant le conduit d'air,
- le corps supplémentaire (5, 7, 8, 11) étant configuré de telle sorte qu'à la hauteur du corps supplémentaire (5, 7, 8, 11) l'air s'écoule le long d'au moins une paroi (6) du corps supplémentaire (5, 7, 8, 11) et en outre le long d'une autre paroi (3) prédéfinissant le conduit d'air,
- le corps supplémentaire (5, 7, 8, 11) étant réalisé sous la forme d'un élément de surface plan dont les parois (6) sont orientées parallèlement au conduit d'air, l'agencement des parois (6) du corps supplémentaire (5, 7, 8, 11) disposé dans le corps de base (2) étant tel que l'air afflue au niveau des parois opposées du corps supplémentaire (5, 7, 8, 11) le long du canal d'air,
**caractérisé en ce que**
- le corps supplémentaire (5, 7, 8, 11) a une structure auto-portante en matériau absorbant les sons,
- le matériau absorbant les sons est un non-tissé en PET solidifié, pressé thermiquement.

2. Elément de guidage d'air selon la revendication 1, **caractérisé en ce que** le corps de base (2) présente une section transversale polygonale, notamment rectangulaire, le corps supplémentaire (5) étant introduit et fixé entre des coins du corps de base (2) opposés l'un à l'autre, notamment diagonalement opposés.

3. Elément de guidage d'air selon la revendication 1 ou 2, **caractérisé en ce que** le corps de base (2) présente des éléments de fixation (9, 10) pour la fixation du corps supplémentaire (5, 7, 8, 11), lesquels sont façonnés notamment d'une seule pièce sur la paroi interne (3) du corps de base (2).

4. Elément de guidage d'air selon la revendication 3, **caractérisé en ce que** les éléments de fixation sont réalisés sous forme de boutons (10) qui délimitent des pistes de fixation pour le corps supplémentaire (5, 7, 8, 11).

5. Elément de guidage d'air selon la revendication 3, **caractérisé en ce que** les éléments de fixation sont réalisés sous forme de rainures (9) qui prédéfinissent des pistes de fixation pour le corps supplémentaire (5, 7, 8, 11).

6. Elément de guidage d'air selon l'une quelconque des revendications 1 à 5, **caractérisé par** deux corps supplémentaires (7, 8) disposés parallèlement l'un à l'autre dans le corps de base (2), dont l'écartement mutuel est notamment supérieur à un quart de la dimension typique en section transversale de la paroi interne (3) du corps de base (2).

7. Elément de guidage d'air selon l'une quelconque des revendications 1 à 6, **caractérisé par** un corps supplémentaire (5, 7, 8, 11) qui présente une longueur de l'ordre d'un quart à la moitié de la longueur typique du corps de base (2).

8. Elément de guidage d'air selon l'une quelconque des revendications 1 à 7, **caractérisé par** un corps supplémentaire (5, 7, 8, 11) ayant un rapport de longueur à largeur de l'ordre de 3:1 à 1:1.
